## Europäisches Patentamt
## European Patent Office
## Office européen des brevets

(19)

(11) Veröffentlichungsnummer : **0 137 092**
**B1**

(12) **EUROPÄISCHE PATENTSCHRIFT**

(45) Veröffentlichungstag der Patentschrift :
23.11.89

(21) Anmeldenummer : 84100602.6

(22) Anmeldetag : 20.01.84

(51) Int. Cl.⁴ : **F 16 J 15/34**

(54) Achs- oder Wellendichtung.

(30) Priorität : 12.10.83 DE 3337033

(43) Veröffentlichungstag der Anmeldung :
17.04.85 Patentblatt 85/16

(45) Bekanntmachung des Hinweises auf die Patenterteilung : 23.11.89 Patentblatt 89/47

(84) Benannte Vertragsstaaten :
AT BE CH DE FR GB IT LI LU NL SE

(56) Entgegenhaltungen :
GB—A— 2 009 339
US—A— 2 747 903
US—A— 3 504 919
US—A— 4 094 518

(73) Patentinhaber : Firma Carl Freudenberg
Höhnerweg 4
D-6940 Weinheim/Bergstrasse (DE)

(72) Erfinder : Hölzer, Helmut
Hegelstrasse 15
D-6940 Weinheim (DE)

(74) Vertreter : Weissenfeld-Richters, Helga, Dr.
Höhnerweg 2
D-6940 Weinheim/Bergstrasse (DE)

EP 0 137 092 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Achs- oder Wellendichtung, bestehend aus einem verdrehsicher und flüssigkeitsdicht in einer Bohrung gelagerten Außenring mit einem sich nach innen erstreckenden ersten Flansch und einem verdrehsicher und flüssigkeitsdicht auf der Achse — oder Welle gelagerten Innenring, der zwei den ersten Flansch U-förmig umgreifende, zweite Flansche aufweist, die die axialen Begrenzungsflächen des ersten Flansches unter einer elastischen Vorspannung im Bereich von Berührungsflächen berühren.

Eine solche Dichtung ist aus US-A-4,094,518 bekannt. Die gegenseitige Verpressung zwischen dem ersten Flansch und dem zweiten Flansch ergibt sich dabei aus der Form des Innenringes sowie den elastischen Eigenschaften des für seine Herstellung verwendeten Werkstoffes sowie aus der relativen Zuordnung der ersten und der zweiten Flansche.

Die Querschnittsform des Innenringes ist außerdem relativ kompliziert. Sie setzt für die Herstellung die Verwendung komplizierter Werkzeuge voraus, was zu einer Verteuerung des Produktes führt.

Hinsichtlich der zur Anwendung gelangenden Werkstoffe muß ein Kompromiß geschlossen werden insofern, als einerseits eine hohe Anpressung zur Erzielung des Abdichtungsergebnisses notwendig ist, andererseits jedoch ein möglichst niedriger Reibungswiderstand angestrebt wird, um die Übertragungsverluste möglichst gering zu halten. Wenig optimale Lösungen in jeder Hinsicht sind daher stets die Folge.

Die erforderliche exakte Zuordnung zwischen Innenring und Außenring setzt schließlich aufwendige Justierarbeiten während der Montage voraus. Diese bleiben zwangsläufig wirkungslos, wenn während des praktischen Betriebes axiale Relativverlagerungen zwischen den abzudichtenden Teilen auftreten, beispielsweise als Folge von Laständerungen bei der Übertragung von Drehmomenten.

Aus der US-A-2,747,903 ist eine Wellendichtung bekannt, bei der der Außenring eine die Welle umschließende, nach innen geöffnete Nute aufweist. In dieser sind zwei flüssigkeitsdicht und verdrehsicher mit der Welle verbundene Teilringe angeordnet, die durch ein Federelement relativ verdrehbar an die axialen Begrenzungsflächen angepreßt sind. Das hiermit erzielte Abdichtungsergebnis ist wenig befriedigend, wenn während der normalen Benutzung Winkelverlagerungen des abgedichteten Maschinenteiles auftreten können, beispielsweise als Folge einer verbogenen Achse oder Welle.

Der Erfindung liegt die Aufgabe zugrunde, eine Dichtung der eingangs genannten Art derart weiterzuentwickeln, daß die genannten Nachteile nicht mehr auftreten. Die Dichtung soll kostengünstig herstellbar sein und es insbesondere ermöglichen, die gegenseitige Verpressung zwischen den beweglich aufeinander gleitenden Teilen unabhängig von der Wahl der für deren Herstellung verwendeten Werkstoffe einzustellen und auf diese Weise bei vermindertem Übertragungsverlusten eine Verbesserung des Abdichtungsergebnisses auch dann zu erzielen, wenn sich während der bestimmungsgemäßen Verwendung Winkelverlagerungen oder Verlagerungen der abgedichteten Welle in axialer Richtung ergeben.

Zur Lösung dieser Aufgabe wird erfindungsgemäß eine Dichtung der eingangs genannten Art vorgeschlagen, die die kennzeichnenden Merkmale des Patentanspruchs 1 aufweist. Auf vorteilhafte Ausgestaltungen nehmen die Unteransprüche Bezug.

Bei der vorgeschlagenen Achs- oder Wellendichtung wird die gegenseitige Verpressung zwischen den aufeinandergleitenden Teilen durch mindestens ein Federelement bewirkt, das in den eigentlichen Reibungsvorgang nicht einbezogen ist. Als Federelement können deshalb elastische Körper beliebiger Art zur Anwendung gelangen, sofern eine gleichmäßige gegenseitige Verpressung der aufeinandergleitenden Teile auf dem gesamten Umfang gewährleistet ist. Dem Zweck wird beispielsweise eine größere Anzahl von gleichmäßig auf dem Umfang verteilten Spiralfedern gerecht, die die beiden Teilringe in axialer Richtung aufeinander abstützen. In gleicher Weise können Gummifederelemente zur Anwendung kommen. Ebenso ist es möglich anstelle einer größeren Anzahl von unabhängig voneinander wirksamen Federkörpern ein in sich geschlossenes Federelement zu verwenden, beispielsweise in Gestalt einer Ringwendelfeder oder eines O-Ringes aus gummielastischem Werkstoff. Das Federelement kann in diesem Falle in einer in radialer Richtung aufgedehnten Form zwischen den einander zugewandten Stirnflächen der Teilringe gelagert sein, die einen sich in radialer Richtung nach innen zunehmend vermindernden Abstand voneinander haben, somit als Kegelflächen ausgebildet sind. Das natürliche Bestreben des Federelementes, seinen ursprünglich kleineren Durchmesser wieder anzunehmen, führt in diesem Falle zu einer axialen Auseinanderpressung der beiden Teilringe des Außenringes und damit zu deren Anpressung an die zweiten Flansche des Innenringes.

Der Innenring und ein Teilring sollen, bezogen auf den anderen Teilring, unter Betriebsbedingungen axial verschiebbar sein. Gleiche Anpreßkräfte zwischen jedem Teilring und dem zugehörigen ersten Flansch sind in diesem Falle unter allen Betriebsbedingungen gewährleistet, insbesondere auch beim Auftreten axialer Verlagerungen der abgedichteten Achse oder Welle. Justierarbeiten bei der Montage sind in diesem Falle absolut entbehrlich.

In funktionstechnischer Hinsicht bedarf weder der Außen- noch der Innenring irgendwelcher elastischer Eigenschaften. Die beiderseitige Werkstoffauswahl kann sich daher auf die Festlegung von Werkstoffpaarungen konzentrieren, die unter Gewährleistung eines guten Abdichtungsergebnisses insbesondere die Einhaltung niedriger Reibungswiderstände gewährleisten. Auch bisher nicht für die Herstellung von Dichtungen verwendete Werkstoffe können daher ohne weiteres in die Überlegungen einbezogen werden, beispielsweise keramische Werkstoffe, Sintermetalle, Glas- oder Gußwerkstoffe sowie thermoplastische Werkstoffe. Diese zeichnen sich teilweise durch einen besonders niedrigen Wärmeausdehnungskoeffizienten sowie durch eine besonders große Sprödigkeit aus, was bei unsachgemäßem Einbau sowie Temperaturveränderungen insbesondere zu einer Zerstörung des Innenringes führen kann. Eine Lagerung entsprechend gefährdeter Teile auf einer Dämpfungsschicht ist daher zu empfehlen. Besonders geeignet sind diesbezüglich Rundschnurringe aus gummielastischen Werkstoffen, die in entsprechend ausgebildeten Nuten gelagert, zusätzlich zu einen Kompensierung entsprechend verursachter Maßdifferenzen die erforderliche Axialbeweglichkeit gewährleisten, eine ausreichende statische Abdichtung, sowie eine für die Übertragung der Drehbewegung ausreichende Festlegung in Umfangsrichtung. Die Einhaltung einer besonders guten Oberflächengüte ist nicht nötig und auch in maßlicher Hinsicht können seitens der abgedichteten Maschinenteile zumeist größere Toleranzen aufgenommen werden. Für die praktische Anwendung ist dieses Merkmal von einer nicht zu unterschätzenden Bedeutung. Die vorgeschlagene Achs- oder Wellendichtung kann auch ausschließlich aus hochtemperaturbeständigen Werkstoffen hergestellt und in entsprechend belasteten Bereichen eingesetzt werden. Entsprechende Anwendungsgebiete waren der eingangs behandelten Ausführung aus grundsätzlichen Erwägungen heraus stets verschlossen.

Die aufeinander gleitenden Flächen des Außen- und des Innenringes sind zur Mittelachse der Dichtung unter einem positiv bzw. negativ geneigten Winkel angeordnet, wobei die Flächen auch mit einer Wölbung versehen sein können. Hierdurch ist die Erzielung eines guten Abdichtungsergebnisses auch beim Auftreten von Winkelverlagerungen des abgedichteten Maschinenteiles gewährleistet. Diese können beispielsweise als Folge einer verbogenen Achse oder Welle auftreten.

Bei der vorgeschlagenen Achs- oder Wellendichtung ist es möglich, mindestens eine Berührungsfläche eines Teilringes und eines zweiten Flansches und/oder einen zweiten Flansch mit hydrodynamisch wirkenden Rückförderelementen für Leckflüssigkeit und/oder Staub zu versehen. Entsprechende Rückförderelemente können durch schaufelartig wirkende Rippen oder Nuten gebildet werden, die bei Einleitung einer Drehbbewegung eine Rückförderung des abgedichteten Mediums in den abgedichteten Raum bewirken.

Der Gegenstand der vorliegenden Erfindung wird nachfolgend anhand der in der Anlage beigefügten Zeichnung weiter erläutert. Es zeigen:

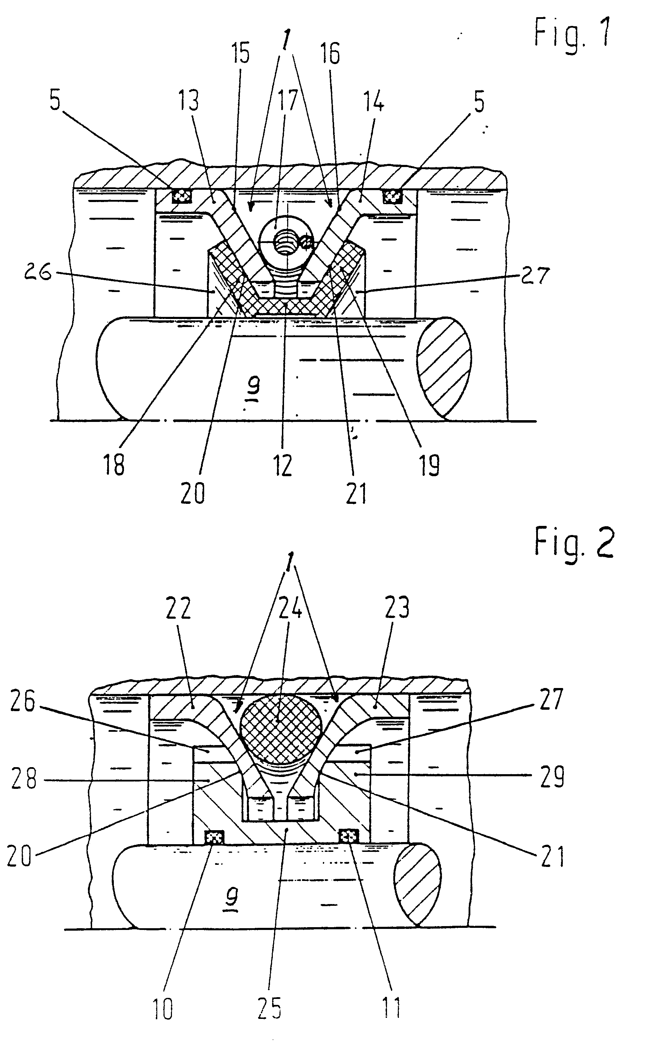

Figur 1 eine Achs- oder Wellendichtung, bei der der Federkörper durch eine Ringwendelfeder gebildet wird, die unter elastischer Aufweitung die kegelig ausgebildeten Stirnflächen der Teilringe des Außenringes aufeinander abstützt. Die Berührungsflächen zwischen den Teilringen und den zweiten Flanschen des Innenringes haben einen kegeligen Verlauf. Ihr axialer Abstand vermindert sich in radialer Richtung nach innen.

Figur 2 eine Ausführung, ähnlich Figur 2, bei der der Federkörper durch einen O-Ring aus gummielastischem Werkstoff gebildet wird. Dieser liegt unter elastischer Vorspannung an der aufnehmenden Gehäusebohrung an. Die Berührungsflächen zwischen den Teilringen des Außenringes und den zweiten Flanschen des Innenringes sind konkav gewölbt. Die zweiten Flansche weisen gleichmäßig auf den Außenumfang verteilte hydrodynamisch wirkende Rückförderelemente in Form von radial vorstehenden Schaufeln auf.

Die Achs- oder Wellendichtung nach Figur 1 besteht aus dem Außenring 1 und dem Innenring 12. Der Innenring weist in radialer Richtung nach außen vorstehende zweite Flansche 18, 19 auf, die mit ihren einander zugewandten Flächen an den nach außen weisenden Seiten der Teilringe 13, 14 des Außenringes 1 anliegen. Die Teilringe 13, 14 sind unabhängig voneinander beweglich. Sie bestehen aus identisch ausgebildeten Einheiten und sind einander spiegelbildlich zugeordnet.

Die beiden einander zugewandten Stirnflächen 15, 16 der Teilringe 13, 14 sind kegelig ausgebildet und haben einen sich in radialer Richtung nach innen zunehmend vermindernden axialen Abstand. Die an den Stirnflächen anliegende, in radialer Richtung aufgeweitete Ringwendelfeder 17 bewirkt daher eine elastische Auseinanderpressung der Teilringe 13, 14 gegen die zweiten Flansche 18, 19 des Innenringes 12. Die erforderliche Beweglichkeit der Teilringe 13, 14 in axialer Richtung ergibt sich aus deren Abstützung in der aufnehmenden Gehäusebohrung mit Hilfe von O-Ringen 5. Letztere bestehen aus einem elastischen Werkstoff und weisen daher die erforderliche Nachgiebigkeit auf.

Die Teilringe 13, 14 bestehen aus Stahlblech, das im Bereich der Berührungsflächen 20, 21 mit PTFE beschichtet ist. Der Innenring 12 besteht aus Gummi. Er ist gegenüber der Welle 9 abgedichtet und in Umfangsrichtung festgelegt. Er folgt daher der Drehbewegung der Welle, vermag sich jedoch beim Auftreten axialer Wellenverlagerungen auf dieser zu verschieben. Die Anpresskräfte zwischen den Teilringen 13, 14 und den zweiten Flanschen 18, 19 sind beiderseits identisch.

Bei der Ausführung nach Figur 2 bestehen die Teilringe 22, 23 des Außenringes aus spiegelbildlich ausgebildeten Formteilen aus PTFE. Sie liegen mit kegelig ausgebildeten, Flächen einerseites an der zugewandten Stirnfläche des Innenringes und andererseits an dem gespannten O-Ring 24 aus gummielastischem Werkstoff an, der die Innenwandung der aufnehmenden Gehäusebohrung zugleich unter einer elastischen Vorspannung berührt. Neben einer guten axialen Beweglichkeit der beiden Teilringe 22, 23 ist hierdurch eine gute statische Abdichtung beider Ringe gegenüber der aufnehmenden Gehäusebohrung gewährleistet.

Der Innenring 25 besteht aus einem Formteil aus Keramik. Diese hat ein U-förmiges Profil und ist durch O-Ringe 10, 11 aus gummielastischem Werkstoff auf der abzudichtenden Welle gelagert. Wärmedehnungen können daher nicht auf den Innenring 25 übertragen werden.

Die Berührungsflächen 20, 21 zwischen den nach außen vorspringenden zweiten Flanschen des Innenringes und den Teilringen 22, 23 des Außenringes sind in sich gewölbt. Die sich beim Auftreten von Winkelverlagerungen der abgedichteten Welle ergebenden Profilverschiebungen werden hierdurch besser aufgefangen. Sie haben nicht unmittelbar eine Beschädigung der Berührungsflächen 20, 21 insbesondere auf der Seite der Teilringe zur Folge. Die auf dem Außenumfang der zweiten Flansche gleichmäßig verteilten, in radialer Richtung nach außen vorspringenden Schaufeln 26, 27 bewirken bei Einleitung einer Drehbewegung eine Rückförderung auftreffenden Mediums jeweils zurück in den angrenzenden Raum. Sie tragen durch diesen dynamischen Effekt zu einer Verbesserung der erwünschten Abdichtungsergebnisses bei.

**Patentansprüche**

1. Achs- oder Wellendichtung, bestehend aus einem verdrehsicher und flüssigkeitsdicht in einer Bohrung gelagerten Außenring (1) mit einem sich nach innen erstreckenden ersten Flansch und einem verdrehsicher und flüssigkeitsdicht auf der Achse — oder Welle (9) gelagerten Innenring (12, 25), der zwei den ersten Flansch U-förmig umgreifende, zweite Flansche (18, 19 ; 28, 29) aufweist, die die axialen Begrenzungsflächen des ersten Flansches unter einer elastischen Vorspannung im Bereich von Berührungsflächen (20, 21) berühren, dadurch gekennzeichnet, daß der erste Flansch durch zwei in einem axialen Abstand angeordnete Teilringe (13, 14 ; 22, 23) gebildet ist, daß der Innenring (12, 25) und die Teilringe (13, 14 ; 22, 23), bezogen aufeinander, axial verschiebbar sind, daß zwischen den Teilringen (13, 14 ; 22, 23) mindestens ein Federelement (17, 24) angeordnet ist, das deren gleichmäßige Anpressung an die zweiten Flansche (18, 19 ; 28, 29) des Innenrings bewirkt und daß die Berührungsflächen (20, 21) zur Mittelachse der Dichtung geneigt angeordnet sind, so daß einerseits der Innenring (12, 25) selbst zentrierend aus Außenring (1) anliegt und andererseits ein gutes Abdichtungsergebnis auch dann erzielt wird, wenn sich während der bestimmungsgemäßen Verwendung der Dichtung Winkelverlagerungen des abgedichteten Maschinenteils ergeben.

2. Achs- oder Wellendichtung nach Anspruch 1, dadurch gekennzeichnet, daß die einander zugewandten Stirnflächen der Teilringe (3, 4 ; 22, 23) einen sich in radialer Richtung nach innen zunehmend vermindernden Abstand haben, somit als Kegelflächen ausgebildet sind und daß das Federelement aus einer Ringfeder (17, 24) besteht, die an den Stirnflächen anliegt und die gespannt ist.

3. Achs- oder Wellendichtung nach Anspruch 2, dadurch gekennzeichnet, daß die Ringfeder aus einem O-Ring aus gummielastischem Werkstoff besteht.

4. Achs- oder Wellendichtung nach Anspruch 3, dadurch gekennzeichnet, daß der O-Ring unter einer elastischen Vorspannung an der Innenfläche des Außenringes und/oder der aufnehmenden Gehäusebohrung anliegt.

5. Achs- oder Wellendichtung nach Anspruch 1 bis 4, dadurch gekennzeichnet, daß die Berührungsflächen (20, 21) in sich gewölbt sind.

6. Achs- oder Wellendichtung nach Anspruch 1 bis 5, dadurch gekennzeichnet, daß die Berührungsflächen (20, 21) einen sich nach innen vermindernden Abstand haben.

7. Achs- oder Wellendichtung nach Anspruch 1 bis 6, dadurch gekennzeichnet, daß mindestens eine Berührungsfläche eines Teilringes (13, 14 ; 22, 23) und eines zweiten Flansches (18, 19 ; 28, 29) und/oder der Außendurchmesser eines zweiten Flansches (18, 19 ; 28, 29) mit hydrodynamisch wirkenden Rückförderelementen (26, 27) für abgedichtetes Medium versehen ist.

8. Achs- oder Wellendichtung nach Anspruch 7, dadurch gekennzeichnet, daß die hydrodynamisch wirkenden Rückförderelemente (26, 27) durch schaufelartig wirkende, gleichmäßig auf dem Umfang verteilte Rippen oder Nuten gebildet werden.

**Claims**

1. An axle or shaft seal composed of an outer ring (1) mounted secure against rotation and fluid-tight in a bore and having a first flange extending inwards and of an inner ring (12, 25) which is mounted secure against rotation and fluid-tight on the axle or shaft (9) and has two second flanges (18, 19 ; 28, 29) which engage U-fashion round the first flange and touch the axial boundary faces of the first flange with a resilient prestress in the region of contact faces (20, 21), characterized in that the first flange is formed by two part rings (13, 14 ; 22, 23) arranged axially spaced, in that the inner ring (12, 25) and the part rings (13, 14 ; 22, 23) can be displaced axially relative to one another, in that at least one spring element (17, 24) is arranged between the part rings (13, 14 ; 22, 23), causing them to be pressed uniformly against the second flanges (18, 19 ; 28, 29) of the inner ring, and in that the contact faces (20, 21) are arranged at an angle to the centre axis of the seal, with the result that on the one hand the inner ring (12, 25) rests self-centeringly against the outer ring (1) and on the other hand a good sealing result is achieved even when angular displacements of the machine part sealed off occur during the use of the seal in accordance with regulations.

2. An axle or shaft seal according to claim 1, characterized in that the mutually facing front faces of the part rings (13, 14 ; 22, 23) have a spacing which progressively decreases in the radially inward direction, thus being in the form of conical faces, and in that the spring element is composed of an annular spring (17, 24) which rests against the front faces and is tensioned.

3. An axle or shaft seal according to claim 2, characterized in that the annular spring is composed of an O-ring of rubber-elastic material.

4. An axle or shaft seal according to claim 3, characterized in that the O-ring rests against the inner face of the outer ring and/or the accommodating housing bore with a resilient prestress.

5. An axle or shaft seal according to any of claims 1 to 4, characterized in that the contact faces (20, 21) are curved in upon themselves.

6. An axle or shaft seal according to any of claims 1 to 5, characterized in that the contact faces (20, 21) have a spacing which decreases inwards.

7. An axle or shaft seal according to any of claims 1 to 6, characterized in that at least one contact face of a part ring (13, 14 ; 22, 23) and of a second flange (18, 19 ; 28, 29) and/or the outside diameter of a second flange (18, 19 ; 28, 29) is provided with hydrodynamically acting return elements (26, 27) for medium sealed off.

8. An axle or shaft seal according to claim 7, characterized in that the hydro-dynamically acting return elements (26, 27) are formed by ribs or grooves distributed uniformly on the periphery and acting like blades.

**Revendications**

1. Joint d'étanchéité pour arbre constitué d'une bague extérieure (1) montée dans un alésage de manière à assurer son étanchéité aux liquides et à empêcher sa rotation, avec une première bride s'étendant vers l'intérieur et une bague intérieure (12, 25) montée sur l'arbre (9) de manière à assurer son étanchéité aux liquides et à empêcher sa rotation, qui présente deux deuxièmes brides (18, 19 ; 28, 29) entourant la première bride en forme de « U », qui viennent au contact des surfaces de délimitation axiale de la première bride avec précontrainte élastique dans la zone des surfaces de contact (20, 21), caractérisé en ce que la première bride est constituée de deux parties de bague (13, 14 ; 22, 23) disposées à une certaine distance axiale, que la bague intérieure (12, 25) et les parties de bague (13, 14 ; 22, 23) peuvent se déplacer axialement les unes par rapport aux autres, qu'entre les parties de bagues (13, 14 ; 22, 23) il existe au moins un élément élastique (17, 24) qui provoque leur pression uniforme contre les deuxièmes brides (18, 19 ; 28, 29) de la bague intérieure et que les surfaces de contact (20, 21) sont disposées avec une inclinaison vers l'axe du joint si bien que, d'une part, la bague intérieure (12, 25) prend appui sur la bague extérieure (1) avec autocentrage et que, d'autre part, l'on obtient une étanchéité de bonne qualité même si des déplacements angulaires de la pièce de machine à rendre étanche se produisent au cours de l'utilisation du joint dans les conditions prévues.

2. Joint d'étanchéité pour arbre selon la revendication 1, caractérisé en ce que les surfaces frontales des parties de bague (3, 4 ; 22, 23) tournées l'une vers l'autre ont une distance diminuant progressivement vers l'intérieur en direction radiale qui présentent donc des surfaces coniques et que l'élément élastique est constitué d'un ressort annulaire (17, 24) qui prend appui sur les surfaces frontales et qui est serré par celles-ci.

3. Joint d'étanchéité pour arbre selon la revendication 2, caractérisé en ce que le ressort annulaire est constitué d'un joint torique en matériau à base de caoutchouc.

4. Joint d'étanchéité pour arbre selon la revendication 3, caractérisé en ce que le joint torique prend appui avec précontrainte élastique sur la surface intérieure de la bague annulaire et/ou de l'alésage du corps qui le reçoit.

5. Joint d'étanchéité pour arbre selon les revendications 1 à 4, caractérisé en ce que les surfaces de contact (20, 21) sont cintrées.

6. Joint d'étanchéité pour arbre selon les revendications 1 à 5, caractérisé en ce que les surfaces de contact (20, 21) ont une distance diminuant vers l'intérieur.

7. Joint d'étanchéité pour arbre selon les revendications 1 à 6, caractérisé en ce qu'au moins une surface de contact d'une partie de bague (13, 14 ; 22, 23) et d'une deuxième bride (18, 19 ; 28, 29) et/ou le diamètre extérieur d'une deuxième bride (18, 19 ; 28, 29) est pourvue d'éléments de renvoi (26, 27) à action hydrodynamique pour le fluide à rendre étanche.

8. Joint d'étanchéité pour arbre selon la revendication 7, caractérisé en ce que les éléments de renvoi (26, 27) à action hydrodynamique sont constitués par des nervures ou des rainures réparties uniformément sur la périphérie et agissant comme des aubages.

EP 0 137 092 B1

Fig. 1

Fig. 2